# EUROPÄISCHE PATENTANMELDUNG

(11) **EP 0 565 748 A1**
(43) Veröffentlichungstag der Anmeldung: **20.10.1993**
(21) Anmeldenummer: 92106375.6
(22) Anmeldetag: 14.04.1992
(51) Int. Cl.: B23Q 1/00, B23Q 11/04, B23B 49/00

(54) **Futter für Werkzeuge**

(71) Anmelder: OTTO BILZ, Werkzeugfabrik GmbH & Co., D-73760 Ostfildern (DE)
(72) Erfinder: Bilz, Reiner, Dipl.-Ing., W-7300 Esslingen (DE)
(74) Vertreter: Kratzsch, Volkhard, Dipl.-Ing.

(57) **Zusammenfassung**

Ein Futter (9) für Werkzeuge, insbesondere Bohrwerkzeue, hat einen in einer Maschinenspindel aufnehmbaren Schaft (10) und eine Hülse (17) darauf, die zur Aufnahme eines Werkzeuges oder eines ein Werkzeug enthaltenden Schnellwechseleinsatzes eingerichtet ist und mit dem Schaft (10) über eine bei axialer Relativverschiebung beider (10,17) ansprechende Längenausgleichseinrichtung verbunden ist. Das Futter (9) hat eine Signaleinrichtung (19) mit Stromquelle (20), Signalgeber (21) und einem bei axialer Relativverschiebung zwischen Schaft (10) und Hülse (17) schließbaren Schalter (22). Auf dem Schaft (10) sitzt ein diesen (10) umgebenden äußerer Ringhalter (42), der die gesamte Signaleinrichtung (19) mitsamt Stromquelle (20), Signalgeber (21) und Schalter (22) trägt und einfach auf den Schaft (10) aufsetzbar ist. Die Signaleinrichtung (19) besteht aus einer Hochfrequenz- oder Infrarot-Sendeeinrichtung.

## Beschreibung

Die Erfindung bezieht sich auf ein Futter für Werkzeuge, insbesondere Bohrwerkzeuge, der im Oberbegriff des Anspruchs 1 genannten Art.

Es ist ein Futter dieser Art bekannt (DE-OS 30 46 485); bei dem die Signaleinrichtung als Hochfrequenzsendeeinrichtung mit Stromquelle, Hochfrequenzsender und Schalter im Stromversorgungskreis des Hochfrequenzsenders ausgebildet ist. Die Hochfrequenzsendeeinrichtung weist als Teil des Signalgebers außerdem einen äußeren Antennenring auf. Mit Ausnahme dieses Antennenringes sind alle sonstigen Komponenten der Hochfrequenzsendeeinrichtung einschließlich der Teile, die den Schalter beaufschlagen, im Inneren des innen hohlen Schaftes angeordnet. Lediglich der äußere Antennenring als Teil des Signalgebers befindet sich außerhalb und umfangsseitig des Schaftes. Die Unterbringung der Komponenten der Signaleinrichtung, mit Ausnahme dieses außen befindlichen Teiles des Signalgebers, im Inneren des hohlen Schaftes hat zwar den Vorteil einer dort geschützten Anordnung, hat aber auch einige Nachteile. So führt diese Anordnung im Inneren des hohlen Schaftes zu einem recht komplizierten Gebilde, wobei im übrigen im Reparaturfall die Elemente im Inneren des Schaftes nur schwer zugänglich sind. Auch läßt sich der Außendurchmesser des Schaftes und damit des Futters durch diese im Schaftinneren enthaltenen Komponenten nicht unter ein bestimmtes Maß hinaus verringern,was aber angestrebt wird, z.B. dann, wenn derartige Futter bei Mehrspindelbohrmaschinen mit relativ kleinen Spindelabständen zum Einsatz kommen sollen. Auch die Signaleinrichtung selbst ist in dieser Gestaltung relativ aufwendig und teuer.

Der Erfindung liegt die Aufgabe zugrunde, ein Futter der im Oberbegriff des Anspruchs 1 genannten Art zu schaffen, das einfacher und kostengünstiger gestaltet werden kann, wobei der Außendurchmesser des Futters bedarfsweise noch weiter verringert werden kann.

Die Aufgabe ist bei einem Futter der im Oberbegriff des Anspruchs 1 definierten Art erfindungsgemäß gelöst durch die Merkmale im Kennzeichnungsteil des Anspruchs 1. Danach ist ein den Schaft umgebender äußerer Ringhalter vorgesehen, der die gesamte Signaleinrichtung mitsamt der Stromquelle, dem gesamten Signalgeber und dem Schalter trägt. Die gesamte Signaleinrichtung befindet sich somit außen, so daß das Innere des Schaftes frei wird. Dadurch ist es möglich, bedarfsweise den Außendurchmesser des Schaftes und damit des Futters noch weiter als bisher möglich zu reduzieren und somit Futter mit noch kleineren Außendurchmessern wie bisher zu schaffen. Durch die Anordnung der Elemente der Signaleinrichtung außerhalb des Schaftes wird im übrigen das Futter wesentlich vereinfacht und verbilligt. Die Signaleinrichtung mit deren Elementen ist ebenfalls einfacher, kompakter und läßt sich kostengünstiger gestalten. Für Einstellzwecke, Wartungszwecke oder Reparaturarbeiten ist die Signaleinrichtung mit ihren einzelnen Komponenten von außen leicht und schnell zugänglich. Auch ist die Signaleinrichtung schnell und einfach montierbar; denn der Ringhalter, der die gesamte Signaleinrichtung mit allen ihren Elementen trägt, kann separat von den übrigen Teilen des Futters vormontiert werden, so daS der gesamte Ring danach z.B. komplett auf den Schaft aufgeschoben und damit verbunden werden kann.

Weitere Merkmale der Erfindung und/oder vorteilhafte Ausgestaltungen dieser enthalten die Ansprüche 2 - 32.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: einen schematischen axialen Längsschnitt eines Teils eines Futters für insbesondere Bohrwerkzeuge gemäß einem ersten Ausführungsbeispiel,
- Fig. 2: einen schematischen axialen Längsschnitt etwa entsprechend demjenigen in Fig. 1 eines Teils eines Futters gemäß einem zweiten Ausführungsbeispiel,
- Fig. 3: einen schematischen axialen Längsschnitt etwa entsprechend demjenigen in Fig. 1 eines Teils eines Futters gemäß einem dritten Ausführungsbeispiel.

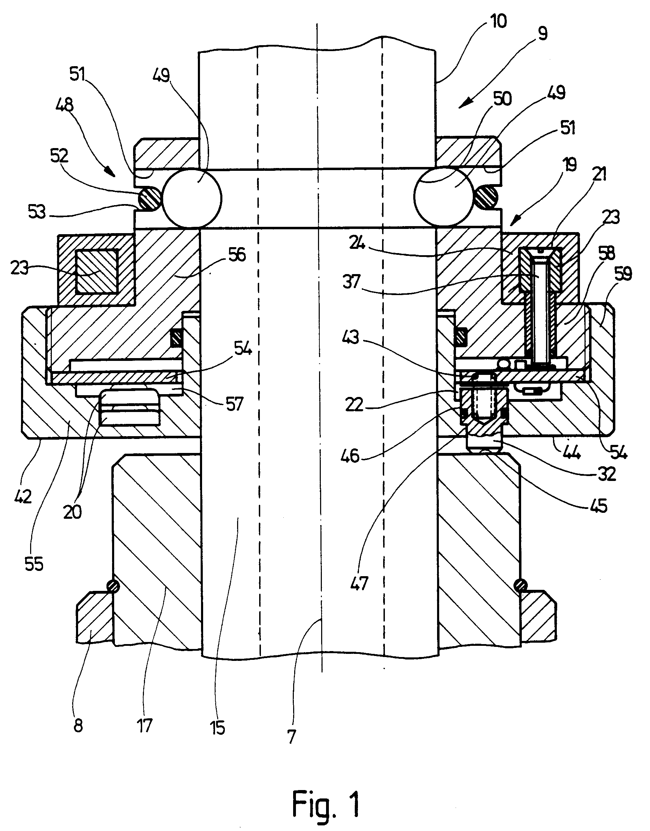

Das in Fig. 1 nur hinsichtlich der hier interessierenden Teile gezeigte Futter 9 ist mit Ausnahme der Komponenten einer später noch erläuterten Signaleinrichtung so ausgebildet, wie in der DE-OS 30 46 485 gezeigt und beschrieben ist. Zur Vermeidung unnötiger Wiederholungen und Beschreibung von konstruktiven Details dieses Futters 9 wird daher auf die DE-OS 30 46 485 und die dortige Beschreibung verwiesen, die damit zum Inhalt dieser Beschreibung gemacht wird.

Das Futter 9 weist einen Schaft 10 auf, von dem in Fig. 1 lediglich ein unterer Teil 15, der hier interessiert, dargestellt ist, während der obere, z.B. als Stellhülse mit innerem Hohlraum ausgebildete Teil des Schaftes 10 nicht dargestellt ist, der in üblicher Weise innerhalb einer Maschinenspindel aufnehmbar ist. Der untere Teil 15 des Schaftes 10 taucht in eine Hülse 17 ein, auf der axial unbeweglich eine Abdeckhülse 8 sitzt. Entsprechend der DE-OS 30 46 485 dient die Hülse 17 am nicht gezeigten unteren Ende zur entweder unmittelbaren Aufnahme eines Werkzeuges, z.B. eines Gewindebohrers, oder zur Aufnahme eines Schnellwechseleinsatzes, der dann seinerseits das Werkzeug, z.B. einen Gewindebohrer, enthält.

Der über die nicht gezeigte Maschinenspindel angetriebene Schaft 10 ist mit der Hülse 17 über eine hier ebenfalls nicht gezeigte Längenausgleichseinrichtung verbunden, die bei einer axialen Relativverschiebung von Schaft 10 und Hülse 17 anspricht und diese Relativverschiebung ermöglicht. Da der Schaft 10 in der Maschinenspindel aufgenommen ist, wird bei dieser Relativverschiebung somit die Hülse 17, ausgehend von der Ausgangsstellung in Fig. 1, in Richtung der Längsmittelachse 7 nach oben weiter auf den Schaft aufgeschoben.

Das Futter 9 ist mit einer Signaleinrichtung 19 mit eigener Stromquelle 20, z.B. in Form mehrerer Batterien, mit einem Signalgeber 21 und mit einem Schalter 22 im Stromversorgungskreis des Signalgebers 21 ausgestattet. Der Schalter 22 ist, ausgehend von der der Schalteröffnungsstellung entsprechenden Ausgangsstellung, bei der axialen Relativverschiebung zwischen dem Schaft 10 und der Hülse 17 schließbar, so daß der Signalgeber 21 an Spannung gelegt und aktiviert wird.

Wie bei der DE-OS 30 46 485 wird bei Ansprechen der nicht gezeigten Längenausgleichseinrichtung in der Signaleinrichtung 19 ein elektrischer Schaltkreis geschlossen, so daß vom Signalgeber 21 ein Signal erzeugt und abgegeben wird, das von einem nicht weiter dargestellten, stationär angeordneten Empfänger empfangen wird und ausgewertet werden kann. Auf diese Weise wird also beim Ansprechen der Längenausgleichseinrichtung ein Signal erzeugt. Die Längenausgleichseinrichtung spricht bei Überschreitung einer vorgegebenen Vorschubkraft an, was z.B. bei stumpfem Bohrer oder bei nicht tief genug gebohrten Bohrungen oder bei durch Späne od.dgl. verstopften Bohrlöchern oder sonstigen Störungsfällen der Fall ist. Durch die erfolgende Kompression der Längenausgleichseinrichtung wird ein entsprechendes Signal erzeugt, das ein Ansprechen dieser Sicherheitseinrichtungsignalisiert.Das abgegebene Signal wird von der z.B. stationär angeordneten Empfangseinrichtung erkannt und als Fehlermeldung an eine z.B. zugeordnete Steuereinheit weitergeleitet. Auch diese Wirkungsweise ist in der DE-OS 30 46 485, dort für eine Hochfrequenzsendeeinrichtung, im Detail beschrieben, worauf zur Vermeidung von Wiederholungen Bezug genommen wird.

Eine Besonderheit des Futters 9 liegt darin, daß der Schaft 10 einen diesen umgebenden äußeren Ringhalter 42 aufweist, der die gesamte Signaleinrichtung 19 mitsamt der Stromquelle 20, dem gesamten Signalgeber 21 und dem Schalter 22 trägt.

Der so ausgestattete Ringhalter 42 ist somit als fertige Funktionseinheit auf den Schaft 10 aufschiebbar. Beim Futter 9 gemäß Fig. 1 weist der Schalter 22 einen gegen eine Feder 43 einschiebbaren Schaltstößel 32 auf. Ersichtlich ist der Schalter 22 außerhalb des Schaftes 10 angeordnet. Sein Schaltstößel 32 ist bei der axialen Relativverschiebung zwischen dem Schaft 10 und der Hülse 17, d.h. beim Ansprechen der beschriebenen Längenausgleichseinrichtung, unmittelbar mittels der Hülse 17, und dabei in Axialrichtung, beaufschlagbar und betätigbar. Der Schalter 22 ist am Ringhalter 42 in zur Längsmittelachse 7 etwa paralleler Ausrichtung gehalten, wobei der Schaltstößel 32 auf der der Hülse 17 zugewandten Axialseite 44 des Ringhalters 42 angeordnet ist. Dabei steht der Schaltstößel 32 an dieser Axialseite 44 aus dem Ringhalter 42 heraus vor, und zwar so weit, daß er unmittelbar, d.h. ohne etwaige Funktionszwischenglieder,von der dem Schaltstößel 32 zugewandten axialen Stirnfläche 45 der Hülse 17 beim Ansprechen der Längenausgleichseinrichtung beaufschlagbar und betätigbar ist. Ersichtlich ist der Schalter 22 in einer etwa achsparallelen Aufnahme 46 im Inneren des Ringhalters 42 und so gehalten, daS der Schaltstößel 32 mit seinem Ende in etwa achsparalleler Richtung aus dem Ringhalter 42 herausragt. Die Aufnahme 46 enthält eine Ringschulter 47, die ein Herausdrücken des Schaltstößels 32 in Fig. 1 nach unten und damit ein Herausfallen dieses verhindert.

Der Ringhalter 42 ist auf dem Schaft 10 zumindest in Grenzen axial verschiebbar gelagert, wobei der Ringhalter 42 in der in Fig. 1 gezeigten axialen Ausgangsstellung, die hinsichtlich des Schalters 22 der Schalteröffnungsstellung entspricht, gesichert ist. Die Sicherung dieser axialen Ausgangsstellung des Ringhalters 42 geschieht mittels einer Rasteinrichtung 48, welche durch eine ihre Haltekraft übersteigende Axialkraft überrastbar ist. Beim ersten Ausführungsbeispiel in Fig. 1 kann diese Rasteinrichtung 48 als Anschnittdruckverstärker ausgebildet sein. Die Rasteinrichtung 48 weist mindestens eine im Ringhalter 42 gehaltene Kugel 49 auf, die etwa radial in eine Ringvertiefung 50, z.B. ringförmige Nut, auf der Außenseite des Schaftes 10 eingreift und federelastisch in diese Ringvertiefung 50 gedrückt ist. Beim ersten Ausführungsbeispiel gemäß Fig. 1 sind mehrere Kugeln 49 vorgesehen, die z.B. in Umfangsrichtung in etwa gleichen Winkelabständen voneinander gehalten sind, z.B. jeweils in etwa radialen Bohrungen 51 des Ringhalters 42. Die Kugeln 49 werden hier durch einen Sprengring 52 radial nach innen gedrückt, der zum Schaft 10 etwa konzentrisch verläuft und außen an den Kugeln 49 angreift, wobei der Ringhalter 42 für den Durchgriff des Sprengringes 52 eine Umfangsnut 53 ausreichender Tiefe aufweisen kann. Auf diese Weise sind die Kugeln 49 einfach montierbar und durch den diese außen umfassenden Sprengring 52 gesichert und außerdem in Radialrichtung nach innen etwa federelastisch vorgespannt, so daß sie in die Ringvertiefung 50 gedrückt werden.

Beim ersten Ausführungsbeispiel in Fig. 1 ist die Signaleinrichtung 19 analog derjenigen gemäß DE-OS 30 46 485 als Hochfrequenzsendeeinrichtung ausgebildet, deren Signalgeber 21 einen im Ringhalter 42 angeordneten Hochfrequenzsender und einen äußeren Antennenring 23 aufweist, der auf der Außenseite des Ringhalters 42 befestigt ist. Der Antennenring 23 ist ringsum mit einem Schutzmantel 24 umkleidet und mittels z.B. elektrisch leitender Schrauben 37 am Ringhalter 42 befestigt. Die Schrauben 37 verlaufen etwa parallel zur Längsmittelachse 7. Der Signalgeber 21, der hier als Hochfrequenzsender gestaltet ist, weist eine im Inneren des Ringhalters 42 angeordnete Senderplatine 54 auf, die mit den für die Hochfrequenzsendeeinrichtung nötigen Bauelementen bestückt ist.

Der Ringhalter 42 besteht hier aus zwei axial zusammengesetzten Ringteilen 55 und 56, zwischen denen ein Ringraum 57 gebildet ist, der nach außen abgedichtet ist. Dabei ist der in Fig. 1 obere Ringteil 56 z.B. unter Bildung eines radial überstehenden Kragens 58 abgestuft, wobei im Bereich dieser Stufe der Antennenring 23 angeordnet ist. Der andere Ringteil 55 ist zumindest außen etwa kappenförmig und übergreift dort mit einem zylinderförmigen Rand 59 den Kragen 58. In diesem Bereich kann der Rand 59 mit einem daran vorgesehenen Innengewinde auf ein Außengewinde des Kragens 58 aufgeschraubt sein. Im zwischen den Ringteilen 55, 56 gebildeten Ringraum 57 befindet sich der Hochfrequenzsender, insbesondere die Senderplatine 54, die somit darin geschützt untergebracht ist. Ein dem zugewandten Ende des Schaltstößels 32 zugeordneter Teil der Senderplatine 54 bildet zusammen mit diesem Ende des Schaltstößels 32 den Schalter 22. Die Senderplatine 54 ist mit ihrem Außenrand zwischen den beiden Ringteilen 55 und 56 des Ringhalters 42 fixiert. Beim ersten Ausführungsbeispiel in Fig. 1 ist in dem einen, in Fig. 1 unteren Ringteil 55 nicht nur der Schalter 22, und zwar dessen Stößel 32 und Feder 43, sondern - in Umfangsrichtung versetzt dazu - auch die Stromquelle 20 enthalten, die z.B. mehrere Batterien aufweist, die dort mit der Senderplatine 54 in elektrisch leitender Verbindung gehalten sind. Im anderen, in Fig. 1 oberen Ringteil 56 ist die Rasteinrichtung 48 mit den Kugeln 49 in den Bohrungen 51 und dem Sprengring 52 enthalten.

Spricht die nicht gezeigte Längenausgleicheinrichtung bei Überschreiten einer vorgegebenen Vorschub kraft an, so wird der Schaft 10 weiter in die Hülse 17 eingeschoben, somit also die Hülse 17 in Fig. 1 relativ zum Schaft 10 nach oben verschoben wird. Dabei wird von der Stirnfläche 45 der Hülse 17 der Schaltstößel 32 gegen die Wirkung der Feder 43 nach oben verschoben. Der Schalter 22 wird geschlossen. Dadurch wird der elektrische Schaltkreis der Signaleinrichtung 19 in Gestalt der Hochfrequenzsendeeinrichtung geschlossen, so daß ein Hochfrequenzsignal erzeugt und abgegeben wird. Die Abgabe erfolgt über den Antennenring 23. Das Hochfrequenzsignal wird vom nicht weiter dargestellten stationären Hochfrequenzempfänger empfangen und ausgewertet, wie in der DE-OS 30 46 485 beschrieben ist.

Da die gesamte Signaleinrichtung 19 mit allen Komponenten am den Schaft 10 umgebenden äußeren Ringhalter 42 angeordnet ist, ist damit eine wesentliche Vereinfachung und Kostenreduzierung erreicht. Der Ringhalter 42 und die Signaleinrichtung 19 können für sich vormontiert und dann schnell und einfach auf dem Schaft aufgebracht werden. Auch etwaige Reparaturarbeiten oder ein Austausch der Signaleinrichtung 19 gegen eine andere sind schnell und problemlos zubewerkstelligen.

Beim Ansprechen der Längenausgleichseinrichtung, Einschalten der Signaleinrichtung 19 und bei der Abgabe eines entsprechenden Signales wird die vom Schaltstößel 32 und der Senderplatine 54 aufzunehmende Axialkraft, die bei der Relativverschiebung zwischen Schaft 10 und Hülse 17 wirksam ist, durch die Rasteinrichtung 48 begrenzt. Übersteigt diese Axialkraft die Haltekraft der Rasteinrichtung 48, so werden die Kugeln 49 gegen die Wirkung des Sprengringes 52 radial nach außen gedrückt, so daß sie außer Eingriff mit der Ringvertiefung 50 des Schaftes 10 gelangen. Die Rasteinrichtung 48 macht es in der Ausbildung als Anschnittdruckverstärker zugleich möglich, den Anschnittdruck beim Bohren oder Gewindeschneiden auf einen oberen Wert zu begrenzen.

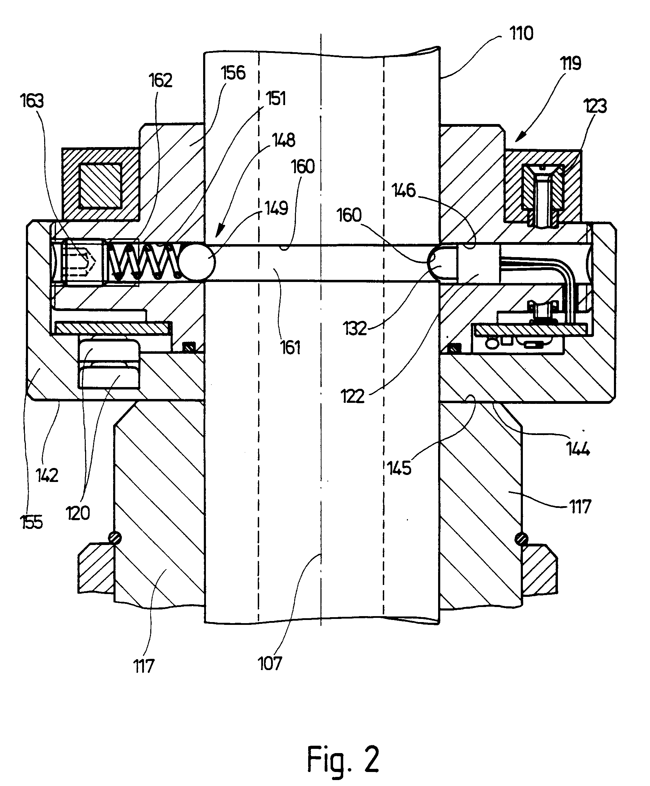

Bei dem in Fig. 2 gezeigten zweiten Ausführungsbeispiel sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles Bezug genommen ist.

Beim zweiten Ausführungsbeispiel in Fig. 2 ist der Ringhalter 142 im wesentlichen genauso wie beim ersten Ausführungsbeispiel gestaltet. Auch die Signaleinrichtung 119 hat die gleichen Komponenten wie in Fig. 1, wobei sie auch bei diesem Ausführungsbeispiel als Hochfrequenzsendeeinrichtung ausgebildet ist. Ein Unterschied besteht hinsichtlich der Anordnung und Ausbildung des Schalters 122. Beim zweiten Ausführungsbeispiel ist der Schaltstößel 132 des außerhalb des Schaftes 110 angeordneten Schalters 122 bei der axialen Relativverschiebung zwischen dem Schaft 110 und der Hülse 117 nicht unmittelbar, wie beim ersten Ausführungsbeispiel, sondern mittelbar mittels der Hülse 117 beaufschlagbar und betätigbar. Der Schaltstößel 132 ist nämlich quer zur Längsmittelachse 107 des Schaftes 110 angeordnet und beaufschlagbar und betätigbar. Die Aufnahme 146 im Ringhalter 142 für den Schalter 122 ist hier quer zur Längsmittelachse 107, insbesondere etwa radial, angeordnet, so daß also der Schaltstößel 132 etwa radial gerichtet ist. Dabei steht der Schaltstößel 132 mit einem etwa radialen Vorsprung 160 des Schaftes 110 axial in formschlüssiger Anlageberührung dann, wenn der Schaltstößel 132 seine in Fig. 2 gezeigte Ausgangsstellung einnimmt, die der Schalteröffnungsstellung entspricht. Dieser etwa radiale Vorsprung 160 des Schaftes 110 ist aus einer Ringschulter am Schaft 110 gebildet, an der der Schaltstößel 132 anliegt und die bei axialer Relativverschiebung vom Schaltstößel 132 unter Verschiebung des Schaltstößels 132 in die Schalterschließstellung überlaufen wird. In einfacher Weise ist dieser radiale Vorsprung 160 mit der Ringschulter durch eine Ringvertiefung 161, z.B. eine Ringnut, auf der Außenseite des Schaftes gebildet, in die der Schaltstößel 132 in seiner gezeigten Ausgangsstellung mit seinem freien Ende eingreift. Der Schalter 122 ist in der etwa radialen Aufnahme 146 des Ringhalters 142 so angeordnet und fixiert, daß der Schaltstößel 132 mit seinem Ende etwa in radialer Richtung aus dem Ringhalter 142 herausragt und in die Ringvertiefung 161 eingreift. Aufgrund dieser Gestaltung ist der etwa radial verlaufende Schaltstößel 132 durch unmittelbar mittels der Hülse 117 erfolgende Axialverschiebung des Ringhalters 142 in die Schalterschließstellung verschiebbar. Diese relative Axialverschiebung geschieht hier dadurch, daß der Ringhalter 142 mit seiner der Hülse 117 zugewandten Axialseite 144 unmittelbar auf die zugewandte axiale Stirnfläche 145 der Hülse 117 auftrifft und aufgrund dessen dann relativ zum Schaft 110 in Fig. 2 nach oben verschoben werden kann. Die axiale Lagerung des Ringhalters 142 auf dem Schaft 110 macht diese axiale Verschiebbarkeit zumindest in Grenzen möglich.

Auch beim zweiten Ausführungsbeispiel ist der Ringhalter 142 auf dem Schaft 110 in der gezeigten axialen Ausgangsstellung mittels einer Rasteinrichtung 148 gesichert, welche durch eine ihre Haltekraft überwindende Axialkraft überrastbar ist. Die Rasteinrichtung 148 weist zumindest eine in einer Bohrung 151 im Ringhalter 142 gehaltene Kugel 149 auf, die etwa radial in die Ringvertiefung 161 auf der Außenseite des Schaftes 110 eingreift und federelastisch mittels einer Feder 162 in die Ringvertiefung 161 gedrückt wird. Als Ringvertiefung 161, in die die mindestens eine Kugel 149 eingreift, dient hier diejenige, in die - in Umfangsrichtung versetzt - der Schaltstößel 132 in seiner Ausgangsstellung eingreift. Die mindestens eine Bohrung 151 mit Kugel 149 darin und die Aufnahme 146 mit Schalter 122 darin sind somit auf dem gleichen Umfangskreis im Ringhalter 142 angeordnet. Dies reduziert die Herstellungskosten. Die die Kugel 149 beaufschlagende Feder, die ebenfalls in der Bohrung 151 enthalten ist, ist mit ihrem der Kugel 149 abgewandten Ende an einem verstellbaren Anschlag 163 abgestützt, der z.B. aus einem in die Bohrung 151 eingreifenden Gewindestift, einer Schraube od.dgl. besteht.

Die Signaleinrichtung 119 ist genauso wie beim ersten Ausführungsbeispiel als Hochfrequenzsendeeinrichtung ausgebildet. Sie hat die gleichen, bereits beschriebenen Komponenten.

Abweichend vom ersten Ausführungsbeispiel ist beim zweiten Ausführungsbeispiel in Fig. 2 im dort unteren Ringteil 155 allein die Stromquelle 120 enthalten, die z.B. aus mehreren Batterien gebildet ist. Der Schalter 122 und die Rasteinrichtung 148 dagegen sind beide im anderen, in Fig. 2 oberen Ringteil 156 des Ringhalters 142 untergebracht, der wie in Fig. 1 auch den Antennenring 123 trägt. Die Aufnahme 146 für den Schalter 122 kann aus einer radialen Bohrung im Ringteil 156 bestehen, wobei diese Bohrung genauso groß wie die Bohrung 151 bemessen sein kann, in der die Kugel 149 mit Feder 162 und Anschlag 163 enthalten ist. Es versteht sich, daß in Umfangsrichtung auch mehrere Bohrungen 151 mit Kugeln 149 und sonstigen Komponenten darin vorgesehen sein können. Durch diese Ausbildung gestaltet sich der Ringhalter 142, insbesondere dessen oberer Ringteil 156, besonders einfach, da dessen Herstellung, insbesondere die Herstellung der Aufnahme 146 und Bohrung 151, dadurch vereinfacht ist.

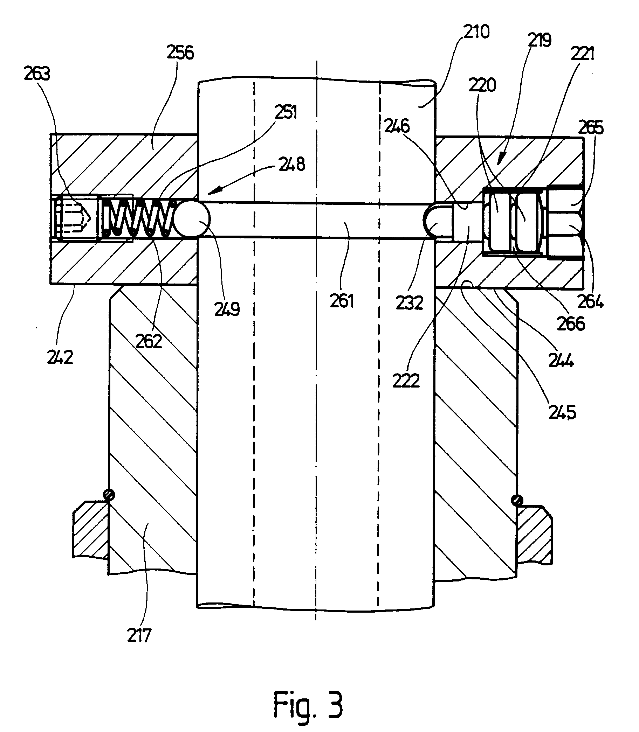

Bei dem in Fig. 3 gezeigten dritten Ausführungsbeispiel sind für die Teile, die dem ersten und/oder zweiten Ausführungsbeispiel entsprechen, um 200 größere Bezugszeichen verwendet, so daß dadurch zur Vermeidung von Wiederholungen auf die Beschreibung dieser Ausführungsbeispiele Bezug genommen ist.

Beim dritten Ausführungsbeispiel in Fig. 3 ist der Ringhalter 242 aus einem einzigen Ring 256 gebildet, der in einer etwa radialen Aufnahme 246 analog Fig. 2 einen Schalter 222 mit radial gerichtetem Schaltstößel 232 enthält. Der Schaltstößel 232 greift analog Fig. 2 in eine Ringvertiefung 261, z.B. Ringnut, auf der Außenseite des Schaftes 210 formschlüssig ein.

Ebenso wie beim zweiten Ausführungsbeispiel in Fig. 2 enthält der Ringhalter 242 auf dem gleichen Umfangskreis eine Rasteinrichtung 248, die genauso wie beim zweiten Ausführungsbeispiel in Fig. 2 gestaltet ist. Die Rasteinrichtung 248 weist mindestens eine Kugel 249 innerhalb einer etwa radialen Bohrung 251 auf. Die Kugel 249 ist mittels einer Feder 262 in die Ringvertiefung 261 gedrückt, wobei sich die Feder 262 mit ihrem der Kugel 249 abgewandten Ende an einem Anschlag 263 abstützt, der z.B. aus einem in einen Gewindeteil der Bohrung 251 eingeschraubten Gewindestift besteht. Wie in Fig. 2 trifft beim Ansprechen der Sicherheitseinrichtung des Futters die Axialseite 244 des Ringhalters 242 auf die zugewandte Stirnfläche 245 der Hülse 217 auf, wobei der Ringhalter 242 durch diesen unmittelbaren Angriff der Hülse 217 bei dieser Relativverschiebung seinerseits relativ zum Schaft 210 verschoben wird, wenn wie beim zweiten Ausführungsbeispiel in Fig. 2 die Rasteinrichtung 248 durch diese Axialkraft überrastet wird, d.h. diese Axialkraft die Haltekraft der Rasteinrichtung 248 übersteigt.

Anders als bei den vorangegangenen Ausführungsbeispielen ist jedoch beim dritten Ausführungsbeispiel in Fig. 3 die Signaleinrichtung 219 als Infrarot-Sendeeinrichtung ausgebildet, deren Signalgeber 221 mindestens eine Infrarot-Leuchtdiode 264 aufweist, die mittels einer Schraube 265 gehalten ist. Im einzigen Ringteil 256 befindet sich innerhalb einer mit der Aufnahme 246 z.B. fluchtenden Kammer 266, z.B. zwischen dem Schalter 222 und der Leuchtdiode 264, die Stromquelle 220, die auch hier z.B. aus mehreren Batterien gebildet ist. Eine solche Signaleinrichtung 219 in Gestalt einer Infrarot-Sendeeinrichtung ist besonders einfach, leicht und kostengünstig. Sie benötigt nur wenige Bauteile, nämlich den Schalter 222, die Stromquelle 220 und die mindestens eine Infrarot-Leuchtdiode 264, die allesamt von einer Seite her in der etwa radialen Aufnahme 246 und Kammer 266 des Ringteiles 256 untergebracht werden können.

Bei einem anderen, nicht gezeigten Ausführungsbeispiel ist die Anordnung so wie beim ersten Ausführungsbeispiel in Fig. 1 getroffen. Der Ringhalter entspricht also exakt dem Ringhalter 42 in Fig. 1, der auch mit der dortigen Rasteinrichtung 48 versehen ist, die z.B. als Anschnittdruckverstärker ausgebildet ist. Jedoch ist bei diesem nicht gezeigten Ausführungsbeispiel die Signaleinrichtung nicht gemäß Fig. 1 als Hochfrequenzsendeeinrichtung ausgebildet, sondern statt dessen als Infrarot-Sendeeinrichtung. Es fällt also im Vergleich zu Fig. 1 der Signalgeber 21 mit Antennenring 23 und dessen Befestigung weg. Der Schalter 22 ist jedoch in gleicher Weise wie in Fig. 1 angeordnet und ausgebildet.
Die Infrarot-Sendeeinrichtung weist mindestens eine Infrarot-Leuchtdiode ähnlich derjenigen in Fig. 3 auf, die nach außen abstrahlt und, geht man vom ersten Ausführungsbeispiel in Fig. 1 aus, im Ringteil 55 angeordnet ist. Statt der in Fig. 1 dargestellten Senderplatine 54 ist bei der Ausgestaltung mit einer Infrarot-Sendeeinrichtung eine die sonstigen Elemente tragende Platine vorgesehen, mit der analog Fig. 1 der axial gerichtete Schalter 22 und ferner die mindestens eine Infrarot-Leuchtdiode verbunden ist.

Bei einem anderen, nicht gezeigten Ausführungsbeispiel ist die Anordnung entsprechend Fig. 2 getroffen, jedoch die dort vorhandene Hochfrequenzsendeeinrichtung entfallen und durch eine Infrarot-Sendeeinrichtung ersetzt. Auch hier entfällt, im Vergleich zu Fig. 2, somit der Antennenring 123 mit Schutzmantel 124 und Schrauben 137. Aufgrund dessen kann beim Ringteil 156 des Ringhalters 142 in Fig. 2 der dortige , nach oben gerichtete und den Schaft 110 umfassende Zylinderteil entfallen, so daß ausgehend von Fig. 2 der Ringteil 156 praktisch nur eine Scheibe ist, die analog Fig. 2 die Rasteinrichtung 148 und eine etwa radiale Aufnahme 146 aufweist, in der ein etwa radialer Schalter 122 entsprechend Fig. 2 angeordnet ist, wobei sowohl die mindestens eine Kugel 149 als auch der Schaltstößel 132 in die gleiche Ringvertiefung 161 des Schaftes 110 entsprechend Fig. 2 eingreifen. Statt der Senderplatine 154 gemäß Fig. 2 kann eine Elektronikplatte an etwa gleicher Stelle vorgesehen sein, die die Elemente der Infrarot-Sendeeinrichtung trägt und mit dem Schalter verbunden ist. Die Infrarot-Sendeeinrichtung weist eine etwa radial gerichtete Infrarot-Leuchtdiode auf, die im Ringteil 155 enthalten und mit der Elektronikplatte verbunden ist.

## Patentansprüche

1. Futter für Werkzeuge, insbesondere Bohrwerkzeuge, mit einem Schaft, der in einer Maschinenspindel aufnehmbar ist, mit einer Hülse, die zur Aufnahme eines Schnellwechseleinsatzes mit Werkzeug oder direkt des Werkzeuges eingerichtet ist und mit dem Schaft über eine bei axialer Relativverschiebung von Schaft und Hülse ansprechende Längenausgleichseinrichtung verbunden ist, und mit einer Signaleinrichtung mit eigener Stromquelle, einem Signalgeber und einem bei der axialen Relativverschiebung zwischen Schaft und Hülse schließbaren Schalter im Stromversorgungskreis des Signalgebers, wobei zumindest ein Teil des Signalgebers außerhalb und umfangsseitig des Schaftes angeordnet ist, **gekennzeichnet durch** einen den Schaft (10; 110; 210) umgebenden äußeren Ringhalter (42; 142; 242), der die gesamte Signaleinrichtung (19; 119; 219) mitsamt der Stromquelle (20; 120; 220), dem gesamten Signalgeber (21; 121; 221) und dem Schalter (22; 122, 222) trägt.

2. Futter nach Anspruch 1, **dadurch gekennzeichnet,** daß der Schaltstößel (32; 132; 232) des außerhalb des Schaftes (10; 110; 210) angeordneten Schalters (22; 122; 222) bei der axialen Relativverschiebung zwischen Schaft (10; 110; 210) und Hülse (17; 117; 217) unmittelbar (Fig. 1) oder mittelbar (Fig. 2, 3) mittels der Hülse (17; 117; 217) beaufschlagbar und betätigbar ist.

3. Futter nach Anspruch 1 oder 2 , **dadurch gekennzeichnet,** daß der Schaltstößel (32) des Schalters (22) von der Hülse (17) in Axialrichtung beaufschlagbar und betätigbar ist (Fig. 1).

4. Futter nach einem der Ansprüche 1 - 3 , **dadurch gekennzeichnet,** daß der Schalter (22) am Ringhalter (42) in zur Längsmittelachse (7) des Schaftes (10) etwa paralleler Ausrichtung gehalten ist und daß der Schaltstößel (32) auf der der Hülse (17) zugewandten Axialseite (44) des Ringhalters (42) angeordnet ist.

5. Futter nach einem der Ansprüche 1 - 4 , **dadurch gekennzeichnet,** daß der Schaltstößel (32) aus dem Ringhalter (42) heraus vorsteht und unmittelbar von der dem Schaltstößel (32) zugewandten axialen Stirnfläche (45) der Hülse (17) beaufschlagbar und betätigbar ist.

6. Futter nach Anspruch 1 oder 2, **dadurch gekennzeichnet,** daß der Schaltstößel (132; 232) des Schalters (122; 222) quer zur Längsmittelachse des Schaftes (110; 210) beaufschlagbar und betätigbar ist.

7. Futter nach Anspruch 6, **dadurch gekennzeichnet,** daß der Schalter (122; 222) am Ringhalter (142; 242) in zur Längsmittelachse des Schaftes (110; 210) quer, insbesondere etwa radial, verlaufender Ausrichtung gehalten ist und daß der Schaltstößel (132; 232) mit einem etwa radialen Vorsprung (160; 161; 261) des Schaftes (110; 210) axial in formschlüssiger Anlageberührung steht.

8. Futter nach Anspruch 7, **dadurch gekennzeichnet,** daß der etwa radiale Vorsprung (160) des Schaftes (110; 210) aus einer Ringschulter am Schaft (110; 210) gebildet ist, an der der Schaltstößel (132; 232) anliegt und die bei axialer Relativverschiebung vom Schaltstößel (132; 232) unter Verschiebung des Schaltstößels (132; 232) in die Schalterschließstellung überlaufen wird.

9. Futter nach Anspruch 7 oder 8, **dadurch gekennzeichnet,** daß der Schaft (110; 210) auf seiner Außenseite eine Ringvertiefung (161; 261), z.B. eine Nut, aufweist, in die der Schaltstößel (132; 232) in seiner der Schalteröffnungsstellung entsprechenden Ausgangsstellung mit seinem freien Ende eingreift.

10. Futter nach einem der Ansprüche 1 - 9 , **dadurch gekennzeichnet,** daß der Schalter (22; 122; 222) in einer etwa achsparallelen oder radialen Aufnahme (46; 146; 246) im Inneren des Ringhalters (42; 142; 242) angeordnet ist und der Schaltstößel (32; 132; 232) mit seinem Ende in etwa achsparalleler bzw. etwa radialer Richtung aus dem Ringhalter (42; 142; 242) herausragt.

11. Futter nach einem der Ansprüche 6 - 10 , **dadurch gekennzeichnet,** daß der etwa radial verlaufende Schaltstößel (132; 232) durch unmittelbar mittels der Hülse (117; 217) erfolgende Axialverschiebung des Ringhalters (142; 242) in Schalterschließstellung verschiebbar ist.

12. Futter nach Anspruch 11, **dadurch gekennzeichnet,** daß der Ringhalter (142; 242) unmittelbar von der diesem zugewandten axialen Stirnfläche (145; 245) der Hülse (117; 217) beaufschlagbar und verschiebbar ist.

13. Futter nach einem der Ansprüche 1 - 12, **dadurch gekennzeichnet,** daß der Ringhalter (42; 142; 242) auf dem Schaft (10; 110; 210) zumindest in Grenzen axial verschiebbar gelagert ist.

14. Futter nach einem der Ansprüche 1 - 13, **dadurch gekennzeichnet,** daß der Ringhalter (42; 142; 242) bei der axialen Relativverschiebung zwischen Schaft (10; 110; 210) und Hülse (17; 117; 217) von der Hülse (17; 117; 217) in einer Achsrichtung beaufschlagbar ist.

15. Futter nach einem der Ansprüche 1 - 14, **dadurch gekennzeichnet,** daß der Ringhalter (42; 142; 242) auf dem Schaft (10; 110; 210) in einer axialen Ausgangsstellung gesichert ist.

16. Futter nach Anspruch 15, **dadurch gekennzeichnet,** daß die axiale Ausgangsstellung des Ringhalters (42; 142; 242) mittels einer Rasteinrichtung (48; 148; 248) gesichert ist, welche durch eine ihre Haltekraft übersteigende Axialkraft überrastbar ist.

17. Futter nach Anspruch 16, **dadurch gekennzeichnet,** daß die Rasteinrichtung (48; 148; 248) als Anschnittdruckverstärker ausgebildet ist.

18. Futter nach Anspruch 16 oder 17**, dadurch gekennzeichnet,** daß die Rasteinrichtung (48; 148; 248) zumindest eine im Ringhalter (42; 142; 242) gehaltene Kugel (49; 149; 249) aufweist, die etwa radial in eine Ringvertiefung (50; 161, 261), z.B. Nut, auf der Außenseite des Schaftes (10; 110; 210) eingreift und federelastisch in die Ringvertiefung (50; 161; 261) gedrückt ist.

19. Futter nach den Ansprüchen 9 und 18, **dadurch gekennzeichnet,** daß als Ringvertiefung (161; 261), z.B. Nut, in die die mindestens eine Kugel (149; 249) eingreift, diejenige dient, in die der Schaltstößel (132, 232) in seiner Ausgangsstellung eingreift.

20. Futter nach Anspruch 18 oder 19, **dadurch gekennzeichnet,** daß an der mindestens einen Kugel (49) außen ein zum Schaft (10) etwa konzentrischer Sprengring (52) angreift, über den die mindestens eine Kugel (49) radial nach innen gedrückt wird.

21. Futter nach Anspruch 18 oder 19, **dadurch gekennzeichnet,** daß die mindestens eine Kugel (149, 249) in einer etwa radialen Bohrung (151; 251) im Ringhalter (142; 242) gehalten ist und daß in dieser Bohrung (151; 251) eine die Kugel (149, 249) beaufschlagende Feder (162, 262) enthalten ist, die mit ihrem der Kugel (149, 249) abgewandten Ende an einem verstellbaren Anschlag (163, 263), z.B. einem in die Bohrung eingreifenden Gewindestift, abgestützt ist.

22. Futter nach einem der Ansprüche 10 bis 21, **dadurch gekennzeichnet,** daß die mindestens eine Bohrung (151, 251) mit Kugel (149, 249) darin und die etwa radiale Aufnahme (146, 246) mit dem Schalter (122; 222) darin auf dem gleichen Umfangskreis im Ringhalter (142, 242) angeordnet sind.

23. Futter nach einem der Ansprüche 1 - 22, **dadurch gekennzeichnet,** daß die Signaleinrichtung (19, 119) als Hochfrequenzsendeeinrichtung ausgebildet ist, deren Signalgeber (21, 121) einen im Ringhalter (42; 142) angeordneten Hochfrequenzsender und einen äußeren Antennenring (23, 123) aufweist, der auf der Außenseite des Ringhalters (42, 142) befestigt ist.

24. Futter nach Anspruch 23, **dadurch gekennzeichnet,** daß der äußere Antennenring (23, 123) ringsum mit einem Schutzmantel (24, 124) umkleidet und isoliert ist.

25. Futter nach Anspruch 23 oder 24, **dadurch gekennzeichnet,** daß der äußere Antennenring (23; 123) mittels z.B. elektrisch leitender Schrauben (37; 137) am Ringhalter (42; 142) befestigt ist.

26. Futter nach einem der Ansprüche 23 - 25, **dadurch gekennzeichnet,** daß der Hochfrequenzsender eine im Inneren des Ringhalters (42; 142) angeordnete Senderplatine (54; 154) aufweist.

27. Futter nach einem der Ansprüche 1 - 22, **dadurch gekennzeichnet,** daß die Signaleinrichtung (219) als Infrarot-Sendeeinrichtung ausgebildet ist, deren Signalgeber (221) mindestens eine Infrarot-Leuchtdiode (264) aufweist.

28. Futter nach einem der Ansprüche 1 - 27, **dadurch gekennzeichnet,** daß der Ringhalter (42; 142) aus zwei axial zusammengesetzten Ringteilen (55, 56; 155, 156) besteht.

29. Futter nach einem der Ansprüche 1 - 28, **dadurch gekennzeichnet,** daß in einem Ringteil (55; 155) der Schalter (22) und/oder die Stromquelle (20, 120), z.B. Batterien, enthalten ist.

30. Futter nach einem der Ansprüche 16 - 29, **dadurch gekennzeichnet,** daß im anderen Ringteil (56; 156) die Rasteinrichtung (48; 148) und/oder der Schalter (122) enthalten ist.

31. Futter nach einem der Ansprüche 28 - 30, **dadurch gekennzeichnet,** daß zwischen den beiden Ringteilen (55, 56; 155, 156) ein Ringraum (57; 157) gebildet und in diesem Ringraum (57; 157) der Hochfrequenzsender, insbesondere die Senderplatine (54; 154),angeordnet ist.

32. Futter nach einem der Ansprüche 1 - 27, **dadurch gekennzeichnet,** daß der Ringhalter (242) aus einem einzigen Ring (256) mit etwa radialen Bohrungen (251, 246) für die Rasteinrichtung (248) und die Signaleinrichtung (219), insbesondere die Stromquelle (220), z.B. Batterien, den Schalter (222) und den Infrarot-Signalgeber (221), gebildet ist.
